# EUROPEAN PATENT APPLICATION

(11) **EP 3 764 303 A1**
(43) Date of publication of application: **13.01.2021**
(21) Application number: 19860203.9
(22) Date of filing: 10.09.2019
(51) Int. Cl.: G06Q 30/02, A63F 13/61, A63F 13/79, A63F 13/792

(54) **INFORMATION PROCESSING DEVICE, ETC. FOR CALCULATING PREDICTION DATA**

(30) Priority: 10.09.2018 JP 2018168962
(71) Applicant: Miotsukushi Analytics Corporation, Tokyo 1030026 (JP)
(72) Inventor: IHARA, Wataru, Tokyo 1030026 (JP)
(74) Representative: V.O.
(86) International application number: PCT/JP2019/037155
(87) International publication number: WO 2020/054879

(57) **Abstract**

The present invention predicts, with high accuracy, how a specific user will behave in the future within an application program. This information processing device 1 generates a learning model through machine learning by using log data that indicates use history of a voluminous application program, and predicts with high accuracy how a specific user will behave in the future within an application program by applying the learning model to the log data that indicates an application use history of the specific user. In addition, the information processing device 1 selects a suitable advertisement for the specific user on the basis of the predicted probability.

## Description

### Technical Field

The present invention relates to an information processing device, an information processing method, and a program for calculating, based on log data indicating a history of use of an application program by one user, prediction data relating to future behavior in the application program of the one user, and relates to a marketing information processing device of selecting an optimal advertisement for the one user.

### Background Art

What behavior a specific user will take in the future in an application program is a matter of great concern and interest for a company which operates the application program. This is because, for example, when there is a user highly likely to spend money in the future among a large number of users, an efficient advertisement that encourages the specific user to spend money in a form specific to the specific user can be placed for the specific user.

Until now, it has been known to predict future behavior in units of a group of a plurality of users based on log data indicating a history of the past use of the application program. For example, it is a prediction of how much the spending rate of male users in their 20's is.

However, such a prediction of future behavior in units of a plurality of users does not have high accuracy of probability. There is a problem also in that an advertisement based on the probability with low accuracy is inefficient.

It should be noted that it has been possible in the past to predict future behavior by focusing on a specific user. However, the workload of analysis increases when the log data becomes enormous, which is not realistic.

Patent Literature 1 relates to a demand prediction system etc., capable of appropriately predicting the demand for products in a store. A prediction unit 103 predicts a traffic route, traffic volume, and the number of visits of people and appropriately predicts the demand for products varying accordingly.

However, the invention described in Patent Literature 1 is in a field different from the present invention, which is the demand prediction of products, and in prediction, the prediction unit 103 refers to actual result information of a past event that is the same as or similar to a target event in terms of type, attribute, etc. In this regard, the prediction unit 103 makes a future prediction in units of group.

Patent Literature 2 relates to a demand prediction system etc., capable of accurately and easily predicting the demand for individual products a customer intends to purchase.

However, the invention described in Patent Literature 2 is in a field different from the present invention, which is the demand prediction of products, and does not use machine learning.

### Citation List

### Patent Literatures

Patent Literature 1: Japanese Published Unexamined Patent Application No. 2018-092267
Patent Literature 2: Japanese Published Unexamined Patent Application No. 2014-119971

### Summary of Invention

### Technical Problem

As described above, conventionally, it has not been known in the application program to predict future behavior in the application program of one user.

Further, although the company that operates the application program holds log data of behavior taken by many users in the application program, this log data is enormous and includes less relevant data. Thus, it has not been easy for the log data holding company to analyze the log data and connect it to future predictions.

An object of the present invention is to predict with high accuracy what behavior a specific user will take in the future in an application program by generating a learning model by machine learning through the use of an enormous amount of log data and applying the learning model to the specific user (not in units of a plurality of users).

The present invention also provides an information processing device of selecting an appropriate advertisement for the specific user based on the predicted probability.

### Solution to Problem

The information processing device according to the present invention is characterized by including a log data acquisition unit adapted to acquire log data indicating a history of use of an application program by one user,
a prediction processing unit adapted to calculate prediction data, which is a prediction result related to the use of the application program by the one user, by analyzing the log data by use of a learning model generated by machine learning, and
an output unit adapted to output the prediction data generated by the prediction processing unit.

A marketing information processing device according to the present invention is characterized by including
a prediction data acquisition unit adapted to acquire the prediction data generated by the information processing device according to the present invention, and
a marketing processing unit adapted to select an advertisement for the one user by using the prediction data.

An information processing method according to the present invention is characterized by including
a first step of acquiring log data indicating a history of use of an application program by one user,
a second step of calculating prediction data, which is a prediction result related to the use of the application program by the one user, by analyzing the log data by use of a learning model generated by machine learning, and
a third step of outputting the prediction data generated by the prediction processing unit.

A program according to the present invention is characterized by causing a computer to execute
a first process of acquiring log data indicating a history of use of an application program by one user,
a second process of calculating prediction data, which is a prediction result related to the use of the application program by the one user, by analyzing the log data by use of a learning model generated by machine learning, and
a third process of outputting the prediction data generated by the prediction processing unit.

### Effects of Invention

According to the present invention, an information processing device etc., of predicting with high accuracy what behavior a specific user will take in the future in an application program can be provided. Further, according to the present invention, an information processing device of selecting an appropriate advertisement for the specific user based on the prediction data can be provided.

### Brief Description of Drawings

FIG. 1 is a functional block diagram illustrating an information processing device 1 according to one embodiment of the present invention.
FIG. 2 is a functional block diagram illustrating an information processing device 1 according to another embodiment of the present invention.
FIG. 3 is a functional block diagram illustrating a marketing information processing device 2 according to one embodiment of the present invention.
FIG. 4 is a flowchart illustrating one example of a learning process performed by a machine learning processing unit 22.
FIG. 5 is a flowchart illustrating one example of a prediction process performed by a prediction processing unit 12.

### Description of Embodiments

Hereinafter, embodiments of the present invention will be described in detail with reference to the drawings.

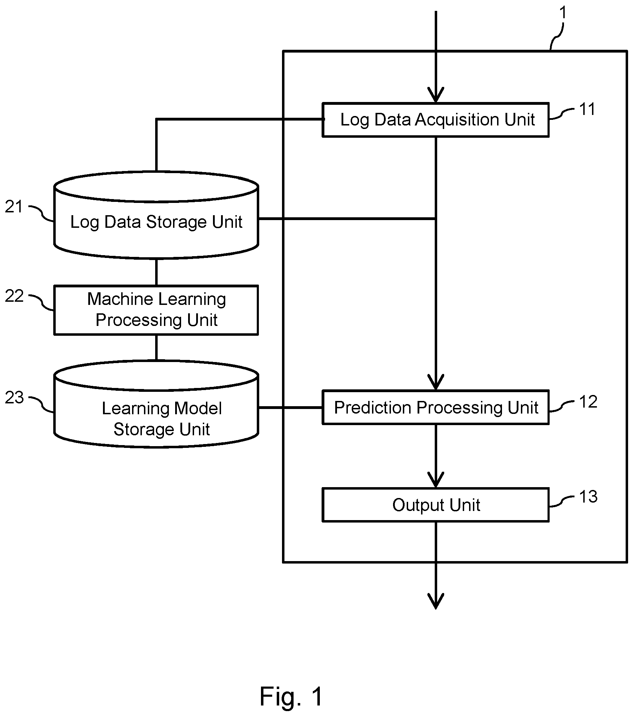

FIG. 1 is a functional block diagram illustrating an information processing device 1 according to one embodiment of the present invention. The information processing device 1 includes a log data acquisition unit 11, a prediction processing unit 12, and an output unit 13. A log data storage unit 21, a machine learning processing unit 22, and a learning model storage unit 23 illustrated as being outside the information processing device 1 are for providing a learning model to the prediction processing unit 12 and are not essential components of the present invention. However, these may be provided in the information processing device 1.

The log data acquisition unit 11 acquires log data indicating a history of use of an application program and sends it to the prediction processing unit 12. The acquired log data may be sent to the log data storage unit 21.

The log data is typically held as a database by a company which operates the application program. When the application program operating company uses the information processing device etc., of the present invention, the log data acquisition unit 11 can acquire the log data by reading out the log data from its own database.

As another mode, the application program operating company may pass the log data to a third party data analytics company and request predictions. In this case, the data analytics company will use the information processing device etc., of the present invention. The data analytics company can acquire the log data from the application program operating company through, for example, a network, in the log data acquisition unit 11.

The history of use of the application program generally includes log data relating to, for example, a user ID, a use start date /use end date of the application program, the frequency of use, a login date and time/duration, what kind of behavior has been taken at the time of using the application program, and details such as a purchase amount when products etc., are purchased through the application program.

When the application program is an e-commerce site handling e-commerce transactions, the log data, in particular, includes the number of times/the duration of viewing a page, the number of times of search executions, search keywords, e-mail magazine openings, the number of times of viewing an image, the number of times of additions to a cart, the number of page transitions until a cart addition, the number of coupons acquired/expired, the number of taps/purchases of recommended products, the number of featured page views/purchases, the number of registered payment methods, the number of transitions until registered payment methods, the number of purchases of the same products, first purchased products, and the number of views of purchased products.

When the application program is a social networking service (so-called SNS), the log data includes the number of messages sent and received, the type of stamp sent and received (whether positive stamp or negative stamp), the time until a received message is opened, the number of sends and receives per day, the number of users who send and receive for the first time per day, the number of sends and receives/the period of sending and receiving with whom the user is interacting with the most, the number of reactions/comments to other's posting/own posting, the number of posts, and the number of clicks on a link/advertisement/an elapsed time until returning.

When the application program is a game, the log data, in particular, includes an in-game billing status (the billing date and time, a billing target (the purchase of an item/character, a purchase of in-game currency, etc.), a billing amount, billing frequency, etc.), a game use status (the date of downloading the game, the number of days elapsed since the downloading, a login date and time, a login time, the number of days elapsed since the last use of the game, etc.), a status of in-game character enhancement (the date and time when a character was enhanced, the number of times, the type of character, etc.), an in-game item use status (the type of item possessed, the number of items possessed, the date and time of using the item, the number of items used, etc.), the progress of the game (the completion status of clearing a task set in the game, the number of times of challenging the task), and the in-game user status (the player's level).

The prediction processing unit 12 extracts log data of one user from the log data received from the log data acquisition unit 11 and executes a learning model (algorithm) stored in the learning model storage unit 23, thereby calculating prediction data, which is a prediction result related to the use of the application program of the one user.

The prediction data includes, for example, the probability that the one user will continue to use the application program for a fixed period in the future (the fixed period continuation rate), the probability that the one user will terminate the use of the application program within a fixed period in the future (the exit rate within a fixed period), and the probability that the one user will purchase products etc., in the application program for a fixed period in the future (the spending rate within a fixed period).

When the application program is a game, in particular, the probability that the one user will spend money within a fixed period in the future (the spending rate), the probability that the one user will play the game continuously in the future (the game continuation rate), and the probability that the one user will stop playing the game in the future (the game abandonment rate) are important as the prediction data.

The output unit 13 outputs the prediction data generated in the prediction processing unit 12. The output may be output as electronic data or may be output by printing out. The method is not limited.

The log data storage unit 21 stores an enormous amount of log data indicating the history of use of the application program acquired in the log data acquisition unit 11. The log data is used as taught data (training data) for generating a learning model. The log data can be sent to the prediction processing unit 12 as log data subject to a prediction process.

The machine learning processing unit 22 generates, using machine learning, a learning model to be executed in the prediction processing unit 12. At that time, the enormous amount of log data stored in the log data storage unit 21 serves as taught data of input/output pairs.

As a model handled by machine learning, any publicly-known model such as a decision tree, inductive inference, a neural network, and deep learning is used. Specific examples include CNN, RNN, SVM, logistic regression, random forest, and XGBoost. In order to construct a learning model with higher accuracy, it is preferable to use deep learning through the use of a neural network as machine learning.

Variables included in the learning model can be set by appropriately selecting those relevant to the generation of prediction data. In order to calculate highly accurate prediction data, a large number of variables are typically used.

Examples of the variables of the application program include, for example, numerical values related to a use status of the application program, behavior details, and a billing status.

When the application program is a game, examples of the variables include the following:
- A numerical value related to the act of purchasing in-game currency (Example: a billing amount)
- A numerical value related to a lottery (generally called "Gacha") for obtaining an item, a character etc., by consuming in-game currency (Example: the number of times of rolling a Gacha)
- A numerical value related to in-game item consumption (Example: the number of specific items consumed)
- A numerical value related to a behavior for improving the status of an in-game character (Example: the number of times of lessons received)
- A numerical value related to an in-game character enhancement (Example: the number of times of synthesizing characters)
- A numerical value related to an in-game user status (Example: a player's level)
- A numerical value related to an in-game task of the user (Example: the number of times of challenging the task)

What is machine-learned as the input/output pair as the taught data can vary depending on what is predicted. For example, when the probability that one user who has been using the application program for three days since the installation will continue to use the application program for the next seven days (the seven-day continuation rate) is desired to be calculated as the prediction data, data obtained by extracting log data indicating a history of use of the user who has been using the application program for three days since the installation is used as input data of the taught data, and whether or not the use has continued for seven days is used as output data to be paired. A learning model can be constructed by causing the machine learning processing unit 22 to read a large amount of this taught data as the input/output pair.

In addition to the above, the prediction menu includes the following, for example:
- The probability that one user who has installed the application program will continue to use it for the next 14 days (the 14-day continuation rate)
- The probability that one user who has not used the application program for a fixed period and thereafter started to use it after a long interval will continue to use it for the next seven days (the seven-day continuation rate after returning)
- The probability that one user currently using the application program will not use it at all in or after the next week (the exit rate)
- The probability that one user currently spending money on the application program will not spend any money at all in or after the next month (the spending abandonment rate)
- The probability that one user who has installed the application program will spend money within 30 days (the spending rate)
- The probability that one user who has not used the application program for a fixed period and thereafter started to use it after a long interval will spend money within 30 days (the spending rate after returning)

The learning model storage unit 23 stores the learning model generated by the machine learning processing unit 22. The learning model storage unit 23 then provides the learning model necessary for calculating the prediction data to the prediction processing unit 12 in response to a request of the prediction processing unit 12.

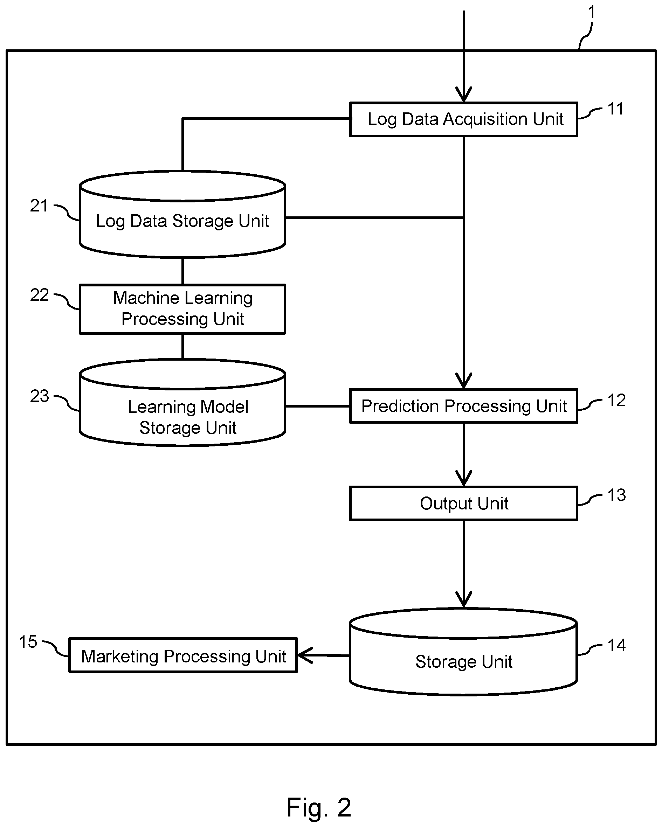

FIG. 2 is a functional block diagram illustrating an information processing device 1 according to another embodiment of the present invention. Here, the information processing device 1 includes a storage unit 14 and a marketing processing unit 15 in addition to a log data acquisition unit 11, a prediction processing unit 12, and an output unit 13. Further, the information processing device 1 includes a log data storage unit 21, a machine learning processing unit 22, and a learning model storage unit 23, which are illustrated as being outside the information processing device 1 in FIG. 1.

The storage unit 14 acquires prediction data from the output unit 13 and stores it. The storage unit 14 also serves as a database of advertisements for users and may store a plurality of advertisements. Further, the storage unit 14 may store a program to be executed at the time of processing in the marketing processing unit 15.

The marketing processing unit 15 acquires the prediction data from the storage unit 14 and selects an advertisement deemed to be optimal for the one user or selects not to advertise to the one user.

When the application program is a game, the prediction data is, for example, the probability that the one user will spend money within a fixed period in the future (the spending rate) and the probability that an item the one user will purchase next is A (the purchase rate for each item).

When the spending rate of the one user is 95% and the purchase rate of the item A is the highest as compared with purchase rates of other items, it can be said that the probability that the one user will purchase the item A is very high. Thus, the marketing processing unit 15 selects an advertisement related to the item A from among a plurality of advertisements stored in the storage unit 14. The application program operating company places an advertisement to the one user according to the determination of the marketing processing unit 15, whereby highly efficient marketing becomes possible.

When the spending rate of the one user is 5%, it can be said that the probability that the one user will purchase any item is low. Thus, the marketing processing unit 15 determines not to place an advertisement to the one user. The application program operating company can determine not to advertise to the one user according to the determination of the marketing processing unit 15, so that unnecessary costs can be saved.

Further, as another similar process, the marketing processing unit 15 can acquire prediction data from the storage unit 14 and, when a target advertisement is already determined, can select a user to whom the advertisement should be placed. For example, when the target advertisement is an advertisement for an item, the marketing processing unit 15 can select a user whose spending rate in the prediction data is not less than a fixed value and can select the user as a user to whom the advertisement should be placed.

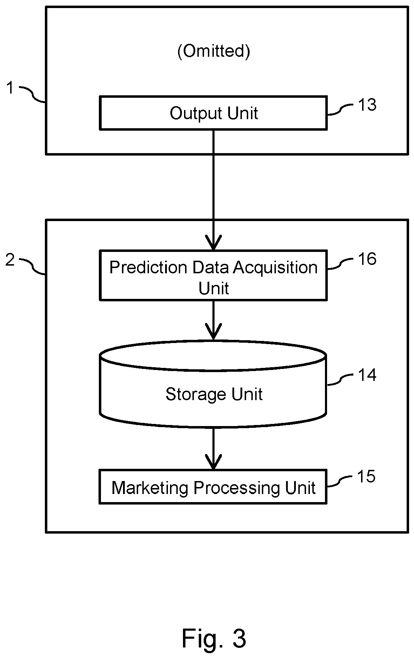

FIG. 3 is a functional block diagram illustrating a marketing information processing device 2 according to one embodiment of the present invention. The marketing information processing device 2 includes a prediction data acquisition unit 16, a storage unit 14, and a marketing processing unit 15. The marketing information processing device 2 is provided outside the information processing device 1.

The prediction data acquisition unit 16 acquires prediction data from the output unit 13 of the information processing device 1 (omitted in FIG. 3 except a part). The prediction data acquisition unit 16 sends the acquired prediction data to the storage unit 14 and an advertisement is selected in the marketing processing unit 15. The process is as described above.

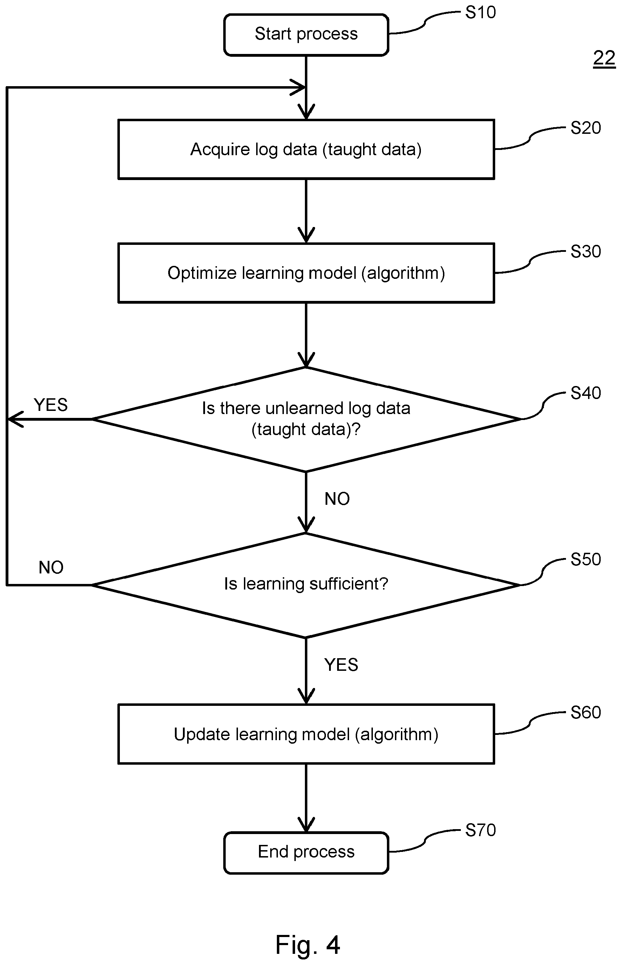

FIG. 4 is a flowchart illustrating one example of a learning process performed by the machine learning processing unit 22.

In Step S20, the machine learning processing unit 22 acquires log data, that is, taught data of input/output pairs.

When the acquired data is not suitable for taught data of machine learning, it is necessary to perform preprocessing for machine learning such as deleting unnecessary data, organizing the data, etc. The preprocessing can be automatically performed by, for example, using a macro function of spreadsheet software. Since the taught data is enormous, such automatic processing is essential for improving work efficiency.

In Step S30, the machine learning processing unit 22 uses the acquired taught data to optimize the learning model (also referred to as a parameter adjustment or tuning). Specifically, the machine learning processing unit 22 reads out the learning model from the learning model storage unit 23 and inputs the taught data of input/output pairs, thereby reconstructing the learning model. For example, when deep learning through the use of a neural network is used in the present invention, parameters between nodes which constitute the neural network are adjusted.

In Step S40, the machine learning processing unit 22 determines whether there is unlearned log data (taught data). When there is unlearned log data (taught data) (YES in Step S40), the machine learning processing unit 22 moves on to the process of Step S20. As a result, learning of the learning model is repeatedly performed and the accuracy of prediction data calculation is improved. On the other hand, when there is no unlearned log data (taught data) (NO in Step S40), the machine learning processing unit 22 moves on to the process of Step S50.

In Step S50, the machine learning processing unit 22 determines whether the learning has been sufficiently performed. For example, as a determination test, the machine learning processing unit 22 appropriately picks up some taught data (pairs of input data and output data) to execute the learning model with respect to the input data. As a result, it becomes possible to confirm whether the output data can be correctly predicted. The machine learning processing unit 22 determines that sufficient learning has been performed when the correct answer rate is not less than a preset threshold. When the learning is determined to be sufficient (YES in Step S50), the machine learning processing unit 22 moves on to the process of Step S60. On the other hand, when the learning is determined to be insufficient (NO in Step S50), the machine learning processing unit 22 repeats the process in or after Step S20.

In Step S60, the machine learning processing unit 22 updates the learning model stored in the learning model storage unit 23 based on the learning result.

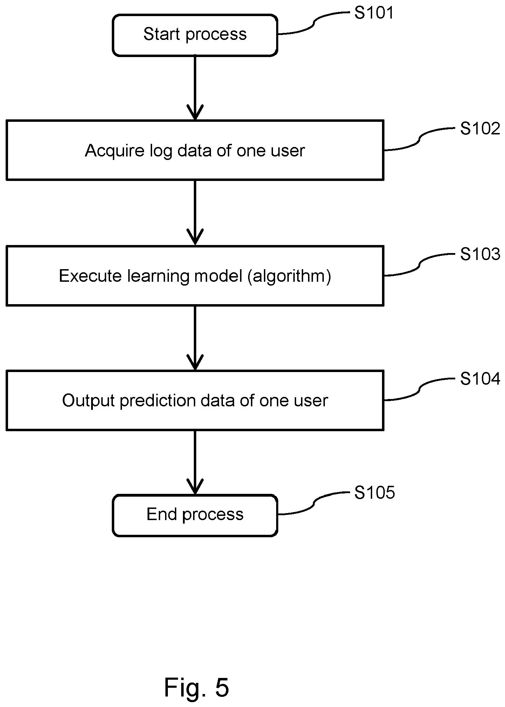

FIG. 5 is a flowchart illustrating one example of a prediction process performed by the prediction processing unit 12.

In Step S102, the prediction processing unit 12 acquires log data of one user from the log data acquisition unit 11.

In Step S103, the prediction processing unit 12 inputs the log data of the one user and executes the learning model.

In Step S104, the prediction processing unit 12 outputs prediction data as a result of the learning model executed.

Up to this point, the embodiments have been described with reference to the drawings. However, these are examples of the present invention and various configurations other than the above can be adopted.

### Reference Signs List

- 1: Information Processing Device
- 11: Log Data Acquisition Unit
- 12: Prediction Processing Unit
- 13: Output Unit
- 14: Storage Unit
- 15: Marketing Processing Unit
- 16: Prediction Data Acquisition Unit
- 21: Log Data Storage Unit
- 22: Machine Learning Processing Unit
- 23: Learning Model Storage Unit

## Claims

1. An information processing device **characterized by** comprising:
a log data acquisition unit (11) adapted to acquire log data indicating a history of use of an application program by one user;
a machine learning processing unit (22) adapted to read and perform machine learning of the past log data of the one user without dividing the log data for each predetermined period;
a prediction processing unit (12) adapted to calculate prediction data within a fixed period of not less than seven days, which is a prediction result related to the use of the application program by the one user, by analyzing the log data by use of a learning model generated by the machine learning processing unit (22); and
an output unit (13) adapted to output the prediction data generated by the prediction processing unit (12).

2. The information processing device according to claim 1, wherein the machine learning is deep learning through the use of a neural network.

3. The information processing device according to claim 1 or 2, wherein the application program is a game.

4. The information processing device according to claim 3, wherein the prediction result is a spending rate, a game continuation rate, and a game abandonment rate of the one user.

5. The information processing device according to claim 1 to 4, **characterized by** further comprising:
a storage unit (14) adapted to store the prediction data outputted from the output unit (13); and
a marketing processing unit (15) adapted to select an advertisement for the one user by using the prediction data stored in the storage unit (14).

6. The information processing device according to claim 1 to 5, **characterized by** further comprising:
a storage unit (14) adapted to store a plurality of the prediction data related to the one user outputted from the output unit (13); and
a marketing processing unit (15) adapted to select, by setting a threshold, the one user to whom a target advertisement should be placed by using the plurality of the prediction data stored in the storage unit (14).

7. A marketing information processing device **characterized by** comprising:
a prediction data acquisition unit (16) adapted to acquire the prediction data generated by the information processing device according to claim 1 to 6; and
a marketing processing unit (15) adapted to select an advertisement for the one user by using the prediction data.

8. An information processing method performed by a computer, **characterized by** comprising:
a first step of acquiring log data indicating a history of use of an application program by one user;
a second step of reading and performing machine learning of the past log data of the one user without dividing the log data for each predetermined period;
a third step of calculating prediction data within a fixed period of not less than seven days, which is a prediction result related to the use of the application program by the one user, by analyzing the log data by using a learning model generated by the second step; and
a fourth step of outputting the prediction data calculated in the third step.

9. The information processing method according to claim 8, wherein the machine learning is deep learning through the use of a neural network.

10. The information processing method according to claim 8 or 9, wherein the application program is a game.

11. The information processing method according to claim 10, wherein the prediction result is a spending rate, a game continuation rate, and a game abandonment rate of the one user.

12. A program causing a computer to execute
a first process of acquiring log data indicating a history of use of an application program by one user;
a second process of reading and performing machine learning of the past log data of the one user without dividing the log data for each predetermined period;
a third process of calculating prediction data within a fixed period of not less than seven days, which is a prediction result related to the use of the application program by the one user, by analyzing the log data by using a learning model generated by the second processing; and
a fourth process of outputting the prediction data calculated in the third processing.
